# EUROPÄISCHE PATENTANMELDUNG

(11) **EP 0 799 847 A1**
(43) Veröffentlichungstag der Anmeldung: **08.10.1997**
(21) Anmeldenummer: 97103927.6
(22) Anmeldetag: 10.03.1997
(51) Int. Cl.: C08G 59/30, C08G 59/40

(54) **Phosphormodifizierte Epoxid-harzmischungen aus Epoxid-harzen, phosphorhaltigen Verbindungen und einem Härter**

(30) Priorität: 01.04.1996 DE 19613064
(71) Anmelder: HOECHST AKTIENGESELLSCHAFT, 65926 Frankfurt am Main (DE)
(72) Erfinder: Hörold, Sebastian, Dr., 50374 Erftstadt (DE); Kleiner, Hans-Jerg, Dr., 61476 Kronberg (DE)

(57) **Zusammenfassung**

Die Erfindung betrifft eine flammwidrige Epoxidharzmischung aus Epoxidharzen, phosphorhaltigen Verbindungen und einem Härter, dadurch gekennzeichnet, daß sie eine phosphorhaltige Verbindung der Formel I oder II 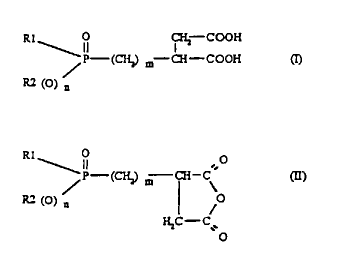 enthalten, in der R1 und R2 gleich oder verschieden sind und für einen geradkettigen oder verzweigten Alkylrest mit 1 bis 8 C-Atomen, einen Cyclohexyl-, Cyclopentyl-, einen Aryl-, einen alkyl- oder alkoxysubstituierten Alkylrest mit 1 bis 18 C-Atomen stehen, wobei R1 und R2 zusammen mit dem P-Atom auch einen Ring bilden können und m, n für 0 oder 1 stehen, ein Verfahren zu ihrer Herstellung und ihre Verwendung.

## Beschreibung

Die vorliegende Erfindung betrifft phosphormodifzierte Epoxidharzmischungen aus Epoxiharzen, phosphorhaltigen Verbindungen und einem Härter, ein Verfahren zu ihrer Herstellung und ihre Verwendung.

Epoxidharze werden heute zur Herstellung von Formmassen und Beschichtungen mit hohen thermischen, mechanischen und elektronischen Eigenschaften eingesetzt. Sie sind geeignet zum Verguß von elektrischen bzw. elektronischen Bauteilen und für Tränk- und Imprägnierprozesse. In der Elektrotechnik werden die verwendeten Epoxidharz-Formmassen überwiegend flammwidrig ausgerüstet.
Epoxidharz-Formmassen werden im allgemeinen mit bromhaltigen aromatischen Verbindungen, insbesondere Tetrabrombisphenol A, flammwidrig ausgerüstet. Werden ausschließlich bromierte Flammschutzmittel eingesetzt, so wird ein Bromgehalt von etwa 20% benötigt, um ein Selbstverlöschen der Formmassen zu gewährleisten. Als Synergist wird häufig Antimontrioxid verwendet. Im Brandfall wird Bromwasserstoff freigesetzt, was zu Schäden durch Korrosion führen kann. Unter ungünstigen Bedingungen können auch polybromierte Dibenzodioxine und Furane entstehen. Es besteht von daher ein Bedarf an Epoxidharz-Formmassen, die die geforderte Flammwidrigkeit ohne Zusatz bromierter Verbindungen erreichen.

Zur flammwidrigen Ausrüstung von Epoxidharz-Formmassen wurden Füllstoffe mit Löschwirkung wie Aluminiumoxidhydrat (DE 35 40 524 A1) vorgeschlagen. Auch durch den Zusatz von Ammoniumpolyphosphat, gegebenenfalls in Kombination mit Aluminiumoxidhydrat, kann eine hinreichende Flammwidrigkeit erreicht werden. Austelle von Ammoniumpolyphosphat kann auch roter Phosphor verwendet werden (DE 17 45 796 A1).

Nachteilig bei allen als Füllstoff vorliegenden Flammschutzmitteln ist, daß keine Transparenz der Materialien erhalten wird. Es wurden bereits zahlreiche flüssige phosphororganische Verbindungen als flammhemmende Kunststoffzusätze vorgeschlagen. Nachteilig bei diesen Systemen ist aber der ausgeprägte "Weichmachereffekt" dieser Zusätze. Bei gehärteten Epoxidharzen äußert sich der weichmachende Effekt in einer starken Herabsetzung der Glasübergangstemperatur.

Die flammwidrige Ausstattung von Epoxidharzen mit epoxidfunktionellen Phosphonsäureestern ist bereits beschrieben (EP 0 384 939 A1). Nachteilig bei diesen Systemen ist der hohe Syntheseaufwand derartiger Phosphonsäureester. In der Literatur bekannt sind auch phosphormodifizierte Epoxidharze, die durch Umsetzung von Polyepoxidverbindungen mit Anhydriden von Phosphonsäuren oder Phosphinsäuren erhalten werden und sich durch ihre flammwidrige Eigenschaften auszeichnen (DE 43 08 185 A1). Technisch leichter zugänglich als Phoshonsäureanhydride sind phosphorhaltigen Dicarbonsäuren oder phosphorhaltigen Carbonsäureanhydride, die beispielsweise zur flammfesten Ausrüstung von Polyesterfasern verwendet werden (US 4,127,590 A1).

Aufgabe der Erfindung war es, phosphormodifizierte Epoxidharzmischungen zur Verfügung zu stellen, die gute flammwidrige Eigenschaften aufweisen, einfach und kostengünstig herzustellen sind und eine Variation des Phosphorgehalts erlauben.

Diese Aufgabe wird gelöst durch phosphorhaltige Epoxidharzmischungen der eingangs beschriebenen Art, dadurch gekkzeichnet, daß sie eine phosphorhaltige Verbindung der Formel I oder II 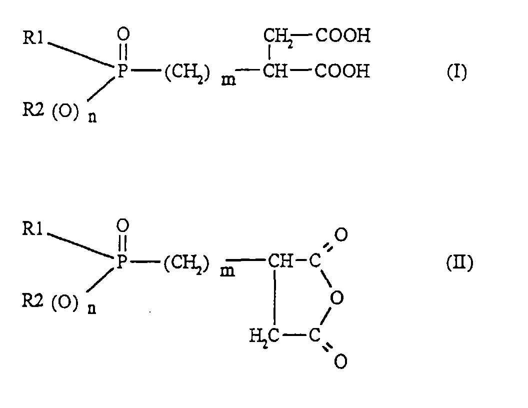 enthalten, in der R1 und R2 gleich oder verschieden sind und für einen geradkettigen oder verzweigten Alkylrest mit 1 bis 8 C-Atomen, einen Cyclohexyl-, Cyclopentyl-, einen Aryl-, einen alkyl- oder alkoxysubstituierten Alkylrest mit 1 bis 18 C-Atomen stehen, wobei R1 und R2 zusammen mit dem P-Atom auch einen Ring bilden können und m, n für 0 oder 1 stehen.

Bevorzugt enthält die flammwidrige Epoxidharzmischung auf 100 Gewichtsteile Epoxidharz 10 bis 100 Gewichtsteile phosphorhaltiger Verbindungen der Formel I oder II und das Gesamtgewichtsverhältnis von Epoxidharz und phosphorhaltiger Verbindung nach Formel I oder II zu Härter beträgt (1 bis 10) zu 1.

Bevorzugt ist die flammwidrige Epoxidharzmischung halogenfrei.

Bevorzugt enthält die flammwidrige Epoxidharzmischung 5 bis 300 Gewichtsteile an phosphorfreien Epoxidharzen.

Bevorzugt enthält die flammwidrige Epoxidharzmischung 5 bis 300 Gewichtsteile an weiteren Inhalts- und/oder Füllstoffen.

Bevorzugt enthält die flammwidrige Epoxidharzmischung 0,5 bis 13 Gew.-% Phosphor.

Besonders bevorzugt enthält die flammwidrige Epoxidharzmischung 1 bis 6 Gew.-% Phosphor.

Bevorzugt enthält die flammwidrige Epoxidharzmischung einen Beschleuniger.

Bevorzugt enthält die flammwidrige Epoxidharzmischung eine Verbindung der Formel III

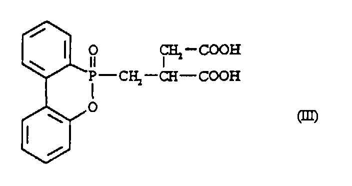

Die Erfindung betrifft ebenfall ein Verfahren zur Herstellung von flammwidrige Epoxidharzmischungen aus Epoxidharzen, phosphorhaltigen Verbindungen und einem Härter, dadurch gekennzeichnet, daß man in einem ersten Reaktionsschritt ein Epoxidharz mit einer phosphorhaltigen Verbindung der Formel I odere II umsetzt und das Reaktionsprodukt anschließend in einem zweiten Reaktionsschritt mit einem Härter in die flammwidrige Epoxidharzmischung überführt.

Bevorzugt erfolgt der erste Reaktionsschritt in einem Lösungsmittel.

Als aprotische, polare Lösungsmittel können N-methylpyrrolidon, Dimethylformamid, Tetrahydrofuran, Dioxan Dialkylether, Glykolether, Ketone und/oder Ester eingesetzt werden.

Als Lösungsmittel können auch halogenierte Kohlenwasserstoffe, aliphatische, cycloaliphatische und/oder aromatische Kohlenwasserstoffe, einzeln oder als Gemische, eingesetzt werden.

Bevorzugt erfolgt die Umsetzung im ersten Reaktionsschritt bei Temperaturen zwischen -10 bis +200 °C.

Besonders bevorzugt erfolgt die Umsetzung bei Temperaturen von 70 bis 130 °C.

Bevorzugt erfogt die Umsetzung im zweiten Reaktionsschritt bei Temperaturen von 0 bis 200 °C.

Besonders bevorzugt erfolgt diese Umsetzung bei Temperaturen von 100 bis 180 °C.

Die Erfindung betrifft auch die Verwendung der erfindungsgemäßen Epoxidharzmischungen in Formkörpern, Beschichtungen oder Laminaten.

Schließlich betrifft die Erfindung Prepregs und Verbundwerkstoffe auf der Basis von anorganischen oder organischen Verstärkunsmaterialien in der Form von Fasern, Vliesen oder Geweben, hergestellt aus erfindungsgemäßenEpoxidharzmischungen.

Die Herstellung der Phosphorverbindungen kann, wie in der EP 665 237 beschrieben, durch Reaktion von Phosphinoxiden mit Fumar-, Malein- oder Itaconsäureestern und anschließende Hydrolyse der Ester mit Säuren erfolgen.

Die erfindungsgemäß eingesetzten halogenfreien Epoxidverbindungen (im folgenden auch Polyepoxidverbindungen genannt) können gesättigt oder ungesättigt sowie aliphatisch, cycloaliphatisch, aromatisch und/oder heterocyclisch sein. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppierungen oder ähnliche. Es können auch Gemische verschiedener Polyepoxidverbindungen verwendet werden. Das mittlere Molekulargewicht Mₙ dieser Polyepoxidverbindungen kann bis zu etwa 9000 betragen, liegt jedoch im allgemeinen bei etwa 150 bis 4000.

Beispielsweise handelt es sich bei diesen Polyepoxidverbindungen um Polyglycidylether auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen, wie Phenol und/oder Kresole, mit Aldehyden, insbesondere Formaldehyd in Gegenwart saurer Katalysatoren), die man in bekannter Weise, beispielsweise durch Umsetzung der jeweiligen Polyole mit Epichlorhydrin, erhält.

Als mehrwertige Phenole sind hier beispielsweise zu nennen: Resorcin, Hydrochinon, 2,2-Bis(4-hydroxyphenyl)propan (Bisphenol A), Isomerengemische des Dihydroxydiphenylmethans (Bisphenol F), 4,4'-Dihydroxydiphenylcyclohexan, 4,4'-Dihydroxy-3,3'-dimethyldiphenylpropan, 4,4-Dihydroxydiphenyl, 4,4'-Dihydroxybenzophenon, Bis(4-hydroxyphenyl) 1,1-ethan, Bis(4-hydroxyphenyl)1,1'-isobutan, Bis(4-hydroxy-tert.-butylphenyl)2,2-propan, Bis(2-hydroxynaphthyl)methan, 1,5-Dihydroxynaphthalin, Tris(4-hydroxyphenyl)methan, Bis(4-hydroxyphenyl)1,1'-ether. Bisphenol A und Bisphenol F sind hierbei bevorzugt.

Auch die Polyglycidylether von mehrwertigen aliphatischen Alkoholen sind als Polyepoxidverbindung geeignet. Als Beispiele derartiger mehrwertiger Alkohole seien 1,4-Butandiol, 1,6-Hexandiol, Polyalkylenglykole, Glycerin, Trimethylolpropan, Bis(4-hydroxycyclohexyl)2,2-propan und Pentaerythrit genannt.

Weiter kommen als Polyepoxidverbindungen auch (Poly)glycidester in Frage, die man erhält durch Umsetzung von Epichlorhydrin oder ähnlichen Epoxyverbindungen mit einer aliphatischen, cycloaliphatischen oder aromatischen Polycarbonsäure, wie Oxalsäure, Adipinsäure, Glutarsäure, Phthal-, Isophthal-, Terephthal-, Tetrahydrophthal- oder Hexahydrophthalsäure, 2,6-Naphthalindicarbonsäure und dimerisierte Fettsäuren. Beispiele hierfür sind Terephthalsäurediglycidylester und Hexahydrophthalsäurediglycidylester.

Auch Polyepoxidverbindungen, die die Epoxidgruppen in statistischer Verteilung über die Molekülkette enthalten und die durch Emulsions-Copolymerisation unter Verwendung von olefinisch ungesättigten, diese Epoxidgruppen enthaltenden Verbindungen hergestellt werden können, wie z.B. Glycidylester der Acryl- oder Methacrylsäure, können in manchen Fällen vorteilhaft eingesetzt werden.

Weitere verwendbare Polyepoxidverbindungen sind beispielsweise solche auf der Basis heterocyclischer Ringsysteme, wie z.B. Hydantoinepoxidharze, Triglycidylisocyanurat und/oder dessen Oligomeren, Triglycidyl-p-aminophenol, Triglycidyl-p-aminodiphenylether, Tetraglycidyldiaminodiphenylmethan, Tetraglycidyldiaminodiphenylether, Tetrakis(4-glycidoxyphenyl)ethan, Urazolepoxide, Uracilepoxide, oxazolidinonmodifizierte Epoxidharze. Weiterhin Polyepoxide auf der Basis von aromatischen Aminen, wie Anilin, beispielsweise N,N-Diglycidylanilin, Diaminodiphenylmethan und N,N'-Dimethylaminodiphenylmethan oder -sulfon. Weitere geeignete Polyepoxidverbindungen sind im "Handbook of Epoxy Resins" von Henry Lee und Kris Neville, McGraw-Hill Book Company, 1967, in der Monographie von Henry Lee "Epoxy Resins", American Chemical Society, 1970, in Wagner/Sarx, "Lackkunstharze", Carl Hanser Verlag (1971), 5. Auflage, 174 ff., in der "Angew. Makromol. Chemie", Bd. 44 (1975), Seiten 151 bis 163, in der DE 27 57 733 A1 sowie in der EP 0 384 939 A1 beschrieben, auf die hiermit Bezug genommen wird.

Bevorzugt eingesetzte Polyepoxidverbindungen sind Bisglycidylether auf Basis von Bisphenol A, Bisphenol F und Bisphenol S (Umsetzungsprodukte dieser Bisphenole und Epichlor(halogen)hydrin) oder deren Oligomere, Polyglycidylether von Phenol/Formaldehyd- und/oder Kresol/Formaldehyd-Novolake sowie Diglycidylester der Phthal-, Isophthal-, Terephthal-, Tetrahydrophthal- und/oder Hexahydrophthalsäure sowie der Trimellithsäure, N-Glycidylverbindungen von aromatischen Aminen und heterocyclischen Stickstoffbasen, wie N,N-Diglycidylanilin, N,N,O-Triglycidyl-p-aminophenol, Triglycidylisocyanurat und N,N,N',N'-Tetraglycidylbis(p-aminophenyl)methan, Hydantoin-Epoxidharze und Aracid-Epoxidharze sowie Di- und Polyglycidylverbindungen von mehrwertigen aliphatischen Alkoholen, wie 1,4-Butandiol, Trimethylolpropan und Polyalkylenglykolen. Des weiteren sind auch oxazolidinonmodifizierte Epoxidharze geeignet. Derartige Verbindungen sind bereits bekannt (siehe: "Angew. Makromol. Chem.", Bd. 44 (1975), Seiten 151 bis 163, sowie US-PS 3 334 110); beispielhaft sei hierfür das Umsetzungsprodukt von Bisphenol-A-diglycidylether mit Diphenylmethandiisocyanat (in Gegenwart eines geeigneten Beschleunigers) genannt. Die Polyepoxidharze können bei der Herstellung der erfindungsgemäßen Überzugsmasse einzeln oder im Gemisch vorliegen.

Der Ausdruck "Härten", wie er hier gebraucht wird, bedeutet die Umwandlung der löslichen, schmelzbaren Polyepoxide in feste, unlösliche und unschmelzbare, dreidimensional vernetzte Produkte, in der Regel unter gleichzeitiger Formgebung, etwa zu Imprägnierungen, Beschichtungen und Verklebungen.

Als Härter können bespielsweise aliphatische, cycloaliphatische, aromatische und heterocyclische Amine, wie Bis(4-aminophenyl)methan, Anilin-Formaldehyd-Harze, Bis(4-aminophenyl)sulfon, Ethylendiamin, Propan-1,3-diamin, Hexamethylendiamin, Diethylentriamin, Triethylentetramin, 2,2,4-Trimethylhexan-1,6-diamin, m-Xylylendiamin, Bis(4-aminocyclohexyl)methan, 2,2-Bis(4-aminocyclohexyl)propan, 3-Aminomethyl-3,5,5-trimethylcyclohexylamin (Isophorondiamin), Polyamidoamine, Polyphenole, wie Hydrochinon, Resorcin, 2,2-Bis(4-hydroxyphenyl)propan (Bisphenol A) und Phenol-Aldehyd-Harze, Polycarbonsäuren und deren Anhydride, wie zum Beispiel Phtalsäureanhydrid, Tetrahydrophtalsäureanhydrid, Hexahydrophtalsäureanhydrid, Pyromellithsäuredianhydrid eingesetzt werden. Darüber hinaus können auch katalytisch wirkende Härtungsmittel wie Cyanguanidine oder Friedel-Crafts-Katalysatoren wie Bortrifluorid verwendet werden.

Werden Amine als Härtungsmittel verwendet, so werden diese normalerweise in 0,75 bis 1,25 Äquivalenten pro Epoxidäquivalent eingesetzt. Bei Polycarbonsäuren oder deren Anhydriden werden 0,4 bis 1,1 Äquivalente pro Epoxidäquivalent verwendet.

Als Beschleuniger kommen vor allem Imidazolderivate, beispielsweise 2-Methylimidazol, 2-Phenylimidazol und 2-Heptadecylimidazol in Frage; weiterhin Phosphine, Metallseifen und Acetylacetonate.

Als Reaktiv-Verdünner kommen beispielsweise mono- oder polyfunktionelle, niedermolekulare Alkohole, die mit Epichlorhydrin umgesetzt werden, in Frage.

Durch Variation des Äquivalentverhältnisses von Polyepoxidverbindung zu phosphorhaltigen Dicarbonsäuren oder phosphorhaltigen Carbonsäureanhydride läßt sich der Phosphorgehalt des erfindungsgemäßen Harzes einstellen Bevorzugt liegt das Äquivalentverhältnis zwischen 1: 0,1 und 1: 0,8 und besonders bevorzugt zwischen 1:0,1 und 1:0,4. Durch die Umsetzung des Epoxidharzes mit einer phosphorhaltigen Dicarbonsäuren oder einem phosphorhaltigen Carbonsäureanhydrid wird ein noch schmelzbares und/oder lösliches, phosphormodifiziertes Epoxidhsrz erhalten, welches lagerstabil, wahlweise auch in Lösung, und einfach zu handhaben ist.

Falls Lösemittel eingesetzt werden, so sind diese aprotisch und vorzugsweise polar. Beispiele hierfür sind:
N-methylpyrrolidon, Dimethylformamid, Ether wie etwa Diethylether, Tetrahydrofuran, Dioxan, Ethylglykolether, Propylenglykolether, Butylglykolether von Monoalkoholen mit einem ggf. verzweigten Alkylrest von 1 bis 6 Kohlenstoffatomen.

Andere Lösungsmittel sind z.B. Ketone, wie etwa Aceton, Methylethylketon, Methylisopropylketon, Methylisobutylketon, Cyclohexanon und ähnliche, aber auch Ester, wie Ethylacetat, Butylacetat, Ethylenglycolacetat und Methoxypropylacetat können eingesetzt werden.

Weitere geeignete Lösungsmittel sind halogenierte Kohlenwasserstoffe sowie cycloaliphatische und/oder aromatische Kohlenwasserstoffe, bevorzugt sind dabei Hexan, Heptan, Cyclohexan, Toluol sowie Dixylole. Es ist möglich, diese Lösemittel einzeln oder im Gemisch einzusetzen.

Bevorzugt sind die Epoxidharz-Formmassen durch Glasgewebe oder Glasfasern verstärkt. Die Epoxidharz-Formmassen können auch mit Füllstoffen wie Quarzmehl oder Aluminiumoxidhydrat ausgerüstet werden.

Die erfindungsgemäßen Epoxidharz-Formmassen können zur Oberflächenbeschichtung verwendet werden. Sie können für den Verguß elektrischer Bauteile, für Laminate sowie für Klebstoffe verwendet werden.

Nachfolgend wird die Erfindung durch Beispiele erläutert. In den Beispielen 1-4 wurde eine Phosphorverbindung nach Formel (III) verwendet:

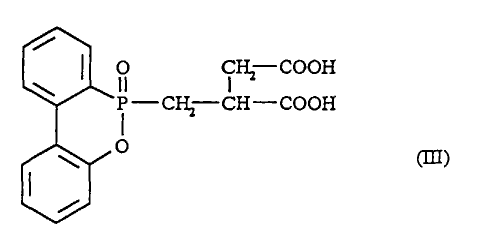

### Herstellung der phosphormodifizierten Epoxidharze

### Beispiel 1

In einem 250 ml Fünfhalskolben mit Rückflußkühler, Rührerwelle, Thermometer und Gaseinleitung werden 100 g eines Bisphenol A-bisglycidylethers mit einem Epoxidwert von 0,55 mol/100g (®Beckopox EP 140, Hoechst AG) und 46,9 g (0,135 mol) der Phosphorverbindung nach Formel III unter Rühren auf maximal 150 °C erhitzt. Nach 30 min ergibt sich eine klare Schmelze. Nach einer weiteren Stunde Rühren bei 150 °C wird die Schmelze abkühlen lassen und gemörsert. Man erhält 146 g eines weißen Pulvers mit einem Epoxidwert von 0,18 mol/100g und einem Phosphorgehalt von 2,85 Gew.-%.

### Beispiel 2

In einem 250 ml Fünfhalskolben mit Rückflußkühler, Rührerwelle, Thermometer und Gaseinleitung werden 100g eines Bisphenol A-bisglycidylethers mit einem Epoxidwert von 0,55 mol/100g (®Beckopox EP 140, Hoechst AG) und 64,3 g (0,19 mol) der Phosphorverbindung nach Formel III unter Rühren auf maximal 150 °C erhitzt. Nach 30 min ergibt sich eine klare Schmelze. Nach einer weiteren Stunde Rühren bei 150 °C wird die Schmelze abkühlen lassen und gemörsert. Man erhält 164 g eines weißen Pulvers mit einem Epoxidwert von 0,13 mol/100g und einem Phosphorgehalt von 3,47 Gew.-%.

### Beispiel 3

In einem 250 ml Fünfhalskolben mit Rückflußkühler, Rührerwelle, Thermometer und Gaseinleitung werden 100g eines Bisphenol A-bisglycidylethers mit einem Epoxidwert von 0,55 mol/100g (®Beckopox EP 140, Hoechst AG) und 46,9 g (0,135 mol) der Phosphorverbindung nach Formel III unter Rühren auf maximal 130 °C erhitzt. Während 2,5 werden 40 ml Isobutylmethylketon dazugegeben Anschließend wird die klare Lösung noch 1 h bei 120 °C gerührt. Man erhält 177 g einer viskosen Lösung (83%ig) mit einem Epoxidwert von 0,17 mol/100g und einem Phosphorgehalt von 2,37 Gew.-%.

### Beispiel 4

In einem 250 ml Fünfhalskolben mit Rückflußkühler, Rührerwelle, Thermometer und Gaseinleitung werden 100 g eines Bisphenol A-bisglycidylethers mit einem Epoxidwert von 0,55 mol/100g (®Beckopox EP 140, Hoechst AG) und 46,9 g (0,135 mol) der Phosphorverbindung nach Formel III unter Rühren auf maximal 150 °C erhitzt. Beim Abkühlen der homogenen Reaktionsmischung werden 36,7 g Methylethylketon dazugegeben. Man erhält 195 g einer viskosen Lösung (75%ig) mit einem Epoxidwert von 0,11 mol/100g und einem Phosphorgehalt von 2,15 Gew.-%.

### Beispiel 5 (mit Dimethylphosphinyl-methyl -bernsteinsäure (IV))

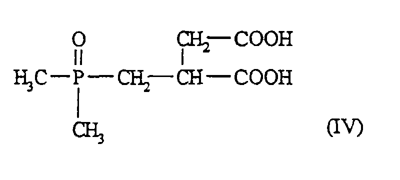

In einem 250 ml Fünfhalskolben mit Rückflußkühler, Rührerwelle, Thermometer und Gaseinleitung werden 100 g eines Bisphenol A-bisglycidylethers mit einem Epoxidwert von 0,55 mol/100g (®Beckopox EP 140, Hoechst AG) und 29 g (0,135 mol) der Phosphorverbindung nach Formel (IV) während 90 min bei 120 °C und 30 min bei 140 °C gerührt. Die klare Schmelze wird nach Abkühlen gemörsert. Man erhält 129 g eines weißen Pulvers mit einem Epoxidwert von 0,19 mol/g und einem Phosphorgehalt von 3,3 Gew.-%.

### Beispiel 6 (mit Diphenylphosphinyl-metiiyl-bernsteinsäure (V))

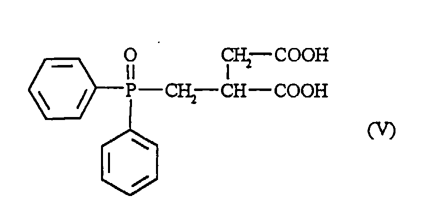

In einem 250 ml Fünfhalskolben mit Rückflußkühler, Rührerwelle, Thermometer und Gaseinleitung werden 100 g eines Bisphenol A-bisglycidylethers mit einem Epoxidwert von 0,55 mol/100g (®Beckopox EP 140, Hoechst AG) und 43 g (0,135 der Phosphorverbindung nach Formel (V) während 90 min bei 120 °C und 30 min bei 140 °C gerührt. Die klare Schmelze wird nach Abkühlen gemörsert. Man erhält 129 g eines weißen Pulvers mit einem Epoxidwert von 0,19 mol/g und einem Phosphorgehalt von 2,8 Gew.-%.

### Herstellung der Epoxidharz-Formmassen

### Beispiel 7

100 g phoshormodifiziertes Epoxidharz nach Beispiel 1 werden bei 120 °C aufgeschmolzen und mit 2,5 g mikronisiertem Dicyandiamid (®Dyhard 100 SF, SKW Trostberg AG) und 0,2 g Imidazol-Beschleuniger (®Dyhard MI, SKW Trostberg AG) intensiv vermischt und in einer Teflonform von 200x200x2 mm im Trockenschrank bei 150-180 °C während 4 h ausgehärtet. Aus dieser Formmasse wurden Prüfkörper von 127 mm Länge und 12,7 mm Breite gesägt.

### Beispiel 8

140 g phoshormodifiziertes Epoxidharz nach Beispiel 5 werden bei 120 °C aufgeschmolzen und mit 3,5 g mikronisiertem Dicyandiamid (®Dyhard 100 SF, SKW Trostberg AG) und 0,3 g Imidazol-Beschleuniger (®Dyhard MI, SKW Trostberg AG) intensiv vermischt und in einer Teflonform von 200x200x2 mm im Trockenschrank bei 150 - 180 °C während 4 h ausgehärtet. Aus dieser Formmasse wurden Prüfkörper von 127 mm Länge und 12,7 mm Breite gesägt.

### Beispiel 9

120 g phoshormodifiziertes Epoxidharz nach Beispiel 6 werden bei 120 °C aufgeschmolzen und mit 3,3 g mikronisiertem Dicyandiamid (®Dyhard 100 SF, SKW Trostberg AG) und 0,3 g Imidazol-Beschleuniger (®Dyhard MI, SKW Trostberg AG) intensiv vermischt und in einer Teflonform von 200x200x2 mm im Trockenschrank bei 150 - 180 °C während 4 h ausgehärtet. Aus dieser Formmasse wurden Prüfkörper von 127 mm Länge und 12,7 mm Breite gesägt.

### Beispiel 10

100 g phosphormodifiziertes Epoxidharz nach Beispiel 1 werden bei 120 °C aufgeschmolzen und mit 32 g Methylcyclohexandicarbonsäureahnydrid und 0,4 g Benzyldimethylamin intensiv vermischt und in einer Teflonform von 200x200x2 mm im Trockenschrank bei 120 - 180 °C während 4 h ausgehartet. Aus dieser Formmasse wurden Prüfkörper von 127 mm Länge und 12,7 mm Breite gesägt.

### Beispiel 11 (Vergleichsbeispiel)

150 g eines Bisphenol-A-bisglycidylethers (®Beckopox EP 140) mit einem Epoxidwert von 0,53 mol/100g werden und mit 6,9 g mikronisiertem Dicyandiamid (®Dyhard 100 SF, SKW Trostberg AG) und 0,3 g Imidazol-Beschleuniger (®Dyhard MI, Methylimidazol SKW Trostberg AG) intensiv vermischt und in einer Teflonform von 200x200x2 mm im Trockenschrank bei 150 - 180 °C während 4 h ausgehärtet. Aus dieser Formmasse wurden Prüfkörper von 127 mm Länge und 12,7 mm Breite gesägt.

Die Prüfung des Brandverhaltens wurde nach der Vorschrift Von Underwriters Laboratories "Test for Flammability of Plastic Materials - UL 94" in der Fassung vom 02.05.1975 an Prüfkorpern von 127 mm Länge, 12,7 mm Breite und 2 mm Dicke durchgeführt. Der Sauerstoffindex wurde in einer Apparatur nach ASTM-D 2863-74 bestimmt.

Tabelle 1 zeigt die Ergebnisse der Sauerstoffindex-Messungen und der Brandtests nach UL 94.

| Epoxidharz-Formmasse | Sauerstoffindex | Nachbrennzeit | UL 94 Klassifizierung |
|---|---|---|---|
| Beispiel 7 | 30,2 | <1', <1' | V-0 |
| Beispiel 8 | 29,4 | <1', <1' | V-0 |
| Beispiel 9 | 29,5 | <1', <2' | V-0 |
| Beispiel 10 | 27,5 | <1', <5' | V-0 |
| Beispiel 11 (Vergleichsbeispiel) | 20,5 | verbrannt | n. k.* |
| n.k.* : nicht klassifiziert | | | |

## Patentansprüche

1. Flammwidrige Epoxidharzmischung aus Epoxidharzen, phosphorhaltigen Verbindungen und einem Härter, dadurch gekennzeichnet, daß sie eine phosphorhaltige Verbindung der Formel I oder II 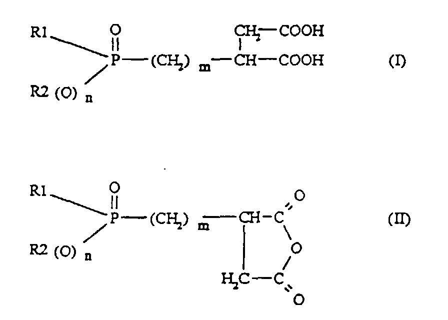 enthalten, in der R1 und R2 gleich oder verschieden sind und für einen geradkettigen oder verzweigten Akrylrest mit 1 bis 8 C-Atomen, einen Cyclohexyl-, Cyclopentyl-, einen Aryl-, einen alkyl- oder alkoxysubstituierten Alkylrest mit 1 bis 18 C-Atomen stehen, wobei R1 und R2 zusammen mit dem P-Atom auch einen Ring bilden können und m, n für 0 oder 1 stehen.

2. Flammwidrige Epoxidharzmischung nach Anspruch 1, dadurch gekennzeichnet, daß sie auf 100 Gewichtsteile Epoxidharz 10 bis 100 Gewichtsteile phosphorhaltiger Verbindungen der Formel I oder II enthält und das Gesamtgewichtsverhältnis von Epoxidharz und phosphorhaltiger Verbindung nach Formel I oder II zu Härter (1 bis 10) zu 1 beträgt.

3. Flammwidrige Epoxidharzmischung nach Anspruch 1 oder 2, dadurch gekennzeichnet, daß sie halogenfrei ist.

4. Flammwidrige Epoxidharzmischung nach einem oder mehreren der Ansprüche 1 bis 3, dadurch gekennzeichnet, daß sie 5 bis 300 Gewichtsteile an phosphorfreien Epoxidharzen enthält.

5. Flammwidrige Epoxidharzmischung nach einem oder mehreren der Ansprüche 1 bis 4, dadurch gekennzeichnet, daß sie 5 bis 300 Gewichtsteile an weiteren Inhalts- und/oder Füllstoffen enthält.

6. Flammwidrige Epoxidharzmischung nach einem oder mehreren der Ansprüche 1 bis 5, dadurch gekennzeichnet, daß sie 0,5 bis 13 Gew.-% Phosphor enthält.

7. Flammwidrige Epoxidharzmischung nach einem oder mehreren der Ansprüche 1 bis 5, dadurch gekennzeichnet, daß sie 1 bis 6 Gew.-% Phosphor enthält.

8. Flammwidrige Epoxidharzmischung nach einem oder mehreren der Ansprüche 1 bis 7, dadurch gekennzeichnet, daß sie einen Beschleuniger enthält.

9. Flammwidrige Epoxidharzmischung nach einem oder mehreren der Ansprüche 1 bis 8, dadurch gekennzeichnet, daß sie eine Verbindung der Formel III 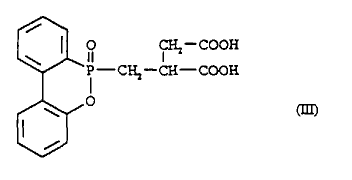 enthält.

10. Verfahren zur Herstellung von flammwidrige Epoxidharzmischungen aus Epoxidharzen, phosphorhaltigen Verbindungen und einem Härter, dadurch gekennzeichnet, daß man in einem ersten Reaktionsschritt ein Epoxidharz mit einer phosphorhaltigen Verbindung der Formel I odere II umsetzt und das Reaktionsprodukt anschließend in einem zweiten Reaktionsschritt mit einem Härter in die flammwidrige Epoxidharzmischung überführt.

11. Verfahren nach Anspruch 10, dadurch gekennzeichnet, daß der erste Reaktionsschritt in einem Lösungsmittel erfolgt.

12. Verfahren nach Anspruch 11, dadurch gekennzeichnet, daß aprotische, polare Lösungsmittel, wie N-methylpyrrolidon, Dimethylformamid, Tetrahydrofuran, Dioxan, Dialkylether, Glykolether, Ketone und/oder Ester eingesetzt werden.

13. Verfahren nach Anspruch 11, dadurch gekennzeichnet, daß als Lösungsmittel halogenierte Kohlenwasserstoffe, aliphatische, cycloaliphatische und/oder aromatische Kohlenwasserstoffe, einzeln oder als Gemische, eingesetzt werden.

14. Verfahren nach einem oder mehreren der Ansprüche 10 bis 13, dadurch gekennzeichnet, daß die Umsetzung im ersten Reaktionsschritt bei Temperaturen zwischen -10 bis +200 °C erfolgt.

15. Verfahren nach Anspruch 14, dadurch gekennzeichnet, daß die Umsetzung bei Temperaturen von 70 bis 130 °C erfolgt.

16. Verfahren nach einem oder mehreren der Ansprüche 10 bis 15, dadurch gekennzeichnet, daß die Umsetzung im zweiten Reaktionsschritt bei Temperaturen von 0 bis 200 °C erfolgt.

17. Verfahren nach Anspruch 16, dadurch gekennzeichnet, daß die Umsetzung bei Temperaturen von 100 bis 180 °C erfolgt.

18. Verwendung von Epoxidharzmischungen nach einem oder mehreren der Ansprüche 1 bis 9 oder hergestellt nach einem oder mehreren der Ansprüche 10 bis 17 in Formkörpern, Beschichtungen oder Laminaten.

19. Prepregs und Verbundwerkstoffe auf der Basis von anorganischen oder organischen Verstärkunsmaterialien in der Form von Fasern, Vliesen oder Geweben, hergestellt aus Epoxidharzmischungen nach einem oder mehreren der Ansprüche 1 bis 9 oder nach dem Verfahren gemäß einem oder mehreren der Ansprüche 10 bis 17.
